# EUROPÄISCHE PATENTSCHRIFT

(11) **EP 3 821 273 B1**
(45) Veröffentlichungstag und Bekanntmachung des Hinweises auf die Patenterteilung: **22.05.2024**
(21) Anmeldenummer: 18746567.9
(22) Anmeldetag: 11.07.2018
(51) Int. Cl.: G01S 15/93, G01S 7/52, G01S 15/87, G01S 17/93, G01S 7/40, G01S 7/497, G01S 13/93

(54) **ERKENNUNG EINER FEHLSTELLUNG EINES ABSTANDSSENSORS BASIEREND AUF EINEM VERHÄLTNIS VON DETEKTIONSMERKMALEN**
DETECTION OF MISALIGNMENT OF A DISTANCE SENSOR BASED ON A RATIO OF DETECTING FEATURES
DÉTECTION DE DÉSALIGNEMENT D'UN CAPTEUR DE DISTANCE SUR LA BASE D'UN RAPPORT DE CARACTÉRISTIQUES DE DÉTECTION

(43) Veröffentlichungstag der Anmeldung: 19.05.2021
(73) Patentinhaber: Valeo Schalter und Sensoren GmbH, 74321 Bietigheim-Bissingen (DE)
(72) Erfinder: THUNERT, Fabian, 74321 Bietigheim-Bissingen (DE); HALLEK, Michael, 74321 Bietigheim-Bissingen (DE); KRAUSE, Rene, 74321 Bietigheim-Bissingen (DE)
(74) Vertreter: Enge, Sebastian
(86) Internationale Anmeldenummer: PCT/DE2018/100632
(87) Internationale Veröffentlichungsnummer: WO 2020/011291

(56) Entgegenhaltungen:
- EP-A1- 2 341 368
- DE-A1-102009 031 561
- DE-C1- 19 650 863
- US-A1- 2012 290 169
- US-A1- 2016 187 466

## Beschreibung

Die vorliegende Erfindung betrifft ein Verfahren zur Erkennung einer Fehlstellung eines Abstandssensors eines Kraftfahrzeugs durch Gewinnen eines Detektionsmerkmals aus einem Sensorsignal des Abstandssensors. Darüber hinaus betrifft die vorliegende Erfindung eine entsprechende Vorrichtung zur Erkennung einer Fehlstellung eines Abstandssensors mit dem Abstandssensor und einer Auswerteeinrichtung zum Gewinnen eines Detektionsmerkmals aus einem Sensorsignal des Abstandssensors. Ferner betrifft die vorliegende Erfindung ein Kraftfahrzeug mit einer solchen Vorrichtung.

Insbesondere Fahrerassistenzsysteme nutzen Abstandssensoren. Es ist an sich bekannt, dass solche Fahrerassistenzsysteme oder Fahrerassistenzvorrichtungen der Unterstützung eines Fahrers eines Kraftfahrzeugs bei der Durchführung bestimmter Vorgänge im Straßenverkehr dienen. In modernen Kraftfahrzeugen, im Folgenden auch kurz als Fahrzeuge bezeichnet, wird bereits eine Vielzahl von Fahrerassistenzsystemen für unterschiedlichste Aufgaben eingesetzt.

So dienen beispielsweise auch als Einparksysteme bezeichnete Fahrerassistenzsysteme einer Unterstützung eines Fahrers eines Fahrzeugs beim Einparken in eine Parklücke. Dabei misst das Einparksystem mit beispielsweise seitlich am Fahrzeug angebrachten Sensoren eine mögliche Parklücke, berechnet aus den Lückendaten eine Einparktrajektorie und steuert das Fahrzeug beispielsweise durch aktiven Lenkeingriff und/oder durch Fahreranweisungen in die Parklücke. Während des Einparkvorgangs beziehungsweise beim Einparken wird die Distanz zu die Parklücke begrenzenden Objekten durch Sensoren überwacht.

Es sind schon einige beispielsweise in Fahrerassistenzsystemen verwirklichte Verfahren und Systeme zur Umfelderfassung bekannt, die anhand eines oder mehrerer seitlich am Fahrzeug angebrachter Abstandssensoren die Umgebung abtasten und geometrische Daten extrahieren, beispielsweise um eine Parklücke in einer Reihe längs des Straßenrands parkender Fahrzeuge zu erkennen, etwa um den Fahrer auf eine solche Parklücke aufmerksam zu machen, oder im Rahmen eines oben beschriebenen Einparksystems, um nur einige Anwendungen zu nennen. Diese bekannten Verfahren und Systeme nutzen die Eigenschaft, dass Objekte der Umgebung, beispielsweise Hindernisse oder parkende Fahrzeuge, die quer zu den Abstandssensoren beziehungsweise deren Erfassungsrichtung relativ bewegt werden, ein Signalprofil erzeugen, das bereits eine zumindest grobe Übereinstimmung mit der Geometrie der Umgebung aufweist. Beispielsweise stellt eine mit zunehmendem Abstand zu einem Hindernis fallende Flanke den Beginn einer Parklücke zwischen am Straßenrand abgestellten parkenden Fahrzeugen dar, wohingegen eine mit abnehmendem Abstand steigende Flanke das Ende der Parklücke angibt.

Diese Verfahren und Systeme funktionieren gut, solange die tatsächliche, beispielsweise durch räumliche Koordinaten X, Y, Z und/oder einen oder mehrere Einbauwinkel α, γ gegebene Position beziehungsweise Einbaulage des mindestens einen Abstandssensors am beziehungsweise im Fahrzeug bekannt ist. Insbesondere werden aktuell Ultraschallsensoren meist im Stoßfänger eines Kraftfahrzeugs verbaut. Um die Funktion eines entsprechenden Ultraschallsystems sicherzustellen, ist es wichtig, dass die ursprüngliche Ausrichtung der Ultraschallsensoren (innerhalb enger Toleranzen) eingehalten wird.

Sobald sich jedoch die bekannte Position beziehungsweise Einbaulage, insbesondere der oder die Einbauwinkel α, γ des mindestens einen Abstandssensors beispielsweise aufgrund eines Auf- oder Anpralls bleibend verändert und damit eine Fehlstellung des mindestens einen Abstandssensors vorliegt, können diese Verfahren und Systeme nicht mehr ordnungsgemäß arbeiten.

Hat beispielsweise ein Kraftfahrzeug eine Kollision erlitten, so kann sich der Stoßfänger deformiert oder gelöst haben. Außerdem kann sich der Sensor aus dem Halter im Stoßfänger oder der Sensorhalter selbst aus dem Stoßfänger gelöst haben. Alle oben genannten Ereignisse führen dazu, dass die ursprüngliche Ausrichtung des Sensors in der Regel nicht mehr sichergestellt ist. Auswirkungen können dann sein, dass der betroffene Sensor mit nachgeschalteter Auswerteeinrichtung entweder zu viele oder zu wenige Objekte erkennt.

Die Norm UN/ECE R42 fordert hingegen nach einer Kollision mit geringen Geschwindigkeiten dass der Antrieb, die Federung (einschließlich Reifen), die Lenkung und die Bremssysteme justiert bleiben und normal funktionieren.

Für sich gesehen ist aus der Druckschrift DE 196 50 863 C12 bekannt, dass eine vertikale Fehlstellung oder Dejustierung eines Abstandssensors durch Auswertung der Mitbewegung eines Fahrzeugs erkannt werden kann.

Ferner offenbart die Druckschrift DE 10 2009 031 561 A1 ein Verfahren zur Erkennung beziehungsweise Korrektur einer Fehlstellung von Abstandssensoren. Es wird das Signalprofil eines Abstandssensors beobachtet und statistisch ausgewertet, wobei eine ausgeprägte Asymmetrie des Signalprofils als Hinweis auf eine Fehlstellung des Abstandssensors gedeutet wird.

Relevanter Stand der Technik ist auch in US2012290169 A1, US2016187466 A1 und EP2341368 A1 zu finden.

Die durch eine Fehlstellung sich ergebenen Nachteile sind beispielsweise eine erhöhte Gefahr von Kollisionen wie etwa mit den eine Parklücke begrenzenden parkenden Fahrzeugen, sowie eine verringerte Zuverlässigkeit derjenigen Fahrerassistenzsysteme eines Fahrzeugs, die auf die extrahierten geometrischen Daten, beispielsweise zur Bahnplanung für eine Ein- und/oder Ausparktrajektorie, zugreifen.

Die Aufgabe der vorliegenden Erfindung besteht somit darin, ein zuverlässigeres Verfahren und eine zuverlässigere Vorrichtung zur Erkennung einer Fehlstellung eines Abstandssensors vorzuschlagen.

Erfindungsgemäß wird diese Aufgabe gelöst durch ein Verfahren und eine Vorrichtung gemäß den unabhängigen Ansprüchen. Vorteilhafte Weiterbildungen der Erfindung ergeben sich aus den Unteransprüchen.

Entsprechend der vorliegenden Erfindung wird demnach ein Verfahren zur Erkennung einer Fehlstellung eines ersten Abstandssensors eines Kraftfahrzeugs durch Gewinnen eines ersten Detektionsmerkmals aus einem ersten Sensorsignal des ersten Abstandssensors bereitgestellt. Ein Abstandssensor wird in einer vorgegebenen Sollposition in einem Kraftfahrzeug eingebaut. Bei einer Kollision des Fahrzeugs kann sich die Stellung eines Abstandssensors, der typischerweise in einem der Stoßfänger untergebracht ist, verändern. Die sich dann ergebende Stellung des Abstandssensors kann als Fehlstellung bezeichnet werden. Beispielsweise ist der Abstandssensor nach der Kollision nicht mehr horizontal ausgerichtet, sondern hängt nach unten. Dies entspricht einer typischen Fehlstellung. Zum Erkennen der Fehlstellung wird das Sensorsignal des Abstandssensors analysiert, sodass ein erstes Detektionsmerkmal aus diesem ersten Sensorsignal dieses ersten Abstandssensors gewonnen wird.

Da aus dem Detektionsmerkmal des ersten Abstandssensors allein eine Fehlstellung des ersten Abstandssensors nicht zuverlässig genug ermittelt werden kann, erfolgt erfindungsgemäß ein Gewinnen eines zweiten Detektionsmerkmals aus einem zweiten Sensorsignal eines zweiten Abstandssensors, wobei die beiden Detektionsmerkmale vom gleichen Typ sind. Durch das zweite Detektionsmerkmal des zweiten Abstandssensors kann beispielsweise ausgeschlossen werden, dass sich nur das Umfeld des Kraftfahrzeugs, z.B. der Fahrbahnuntergrund, geändert hat. Anschließend erfolgt ein Bilden einer Fehlstellungsinformation über die Fehlstellung des ersten Abstandssensors aus einem Verhältnis des ersten Detektionsmerkmals zu dem zweiten Detektionsmerkmal. Die beiden Detektionsmerkmale werden also in Relation zueinander gesetzt. Die Fehlstellungsinformation wird somit aus mehreren Informationen, nämlich den beiden Detektionsmerkmalen gewonnen.

Beispielsweise handelt es sich bei dem Detektionsmerkmal um die Anzahl von Echos der als Ultraschallsensoren ausgebildeten Abstandssensoren. Aus dem Verhältnis der Anzahl der Echos kann nun auf die Fehlstellung des einen Abstandssensors zuverlässig geschlossen werden. Hängt nämlich beispielsweise der erste Abstandssensor nach unten, so werden wesentlich mehr Echos empfangen als üblicherweise bei horizontaler Stellung. Außerdem ist das Signal dann mehr verrauscht. Eine ähnliche Situation ergibt sich allerdings auch bei normaler, d.h. horizontaler Ausrichtung der Abstandssensoren, wenn das Kraftfahrzeug über Schotter fährt. Auch dann werden mehr als üblich Echos registriert. In diesem Fall würden aber beide Abstandssensoren eine erhöhte Anzahl an Echos registrieren. Wird jedoch das Verhältnis der Detektionsmerkmale (hier Anzahl der Echos) gebildet, so kann aus diesem Verhältnis mit höherer Zuverlässigkeit erkannt werden, ob der eine Abstandssensor eine Fehlstellung besitzt.

Es handelt sich bei den beiden Detektionsmerkmalen jeweils um eine Anzahl an Echos, eine Anzahl an detektierten Objekten einer vorgegebenen Klasse, eine Form einer Hüllkurve des jeweiligen Sensorsignals oder ein Maß für ein Signalrauschen. Bezüglich des Detektionsmerkmaltyps "Anzahl an Echos" wurde oben bereits ein Beispiel gegeben. Bezüglich des Typs "Anzahl an detektierten Objekten einer vorgegebenen Klasse" kann anhand der Sensorsignale eine Objekterkennung und Klassifizierung durchgeführt werden. Dabei können beispielsweise als Objekte Bordsteine, parkende Autos und dergleichen erkannt werden. Auch die Form einer Hüllkurve des jeweiligen Sensorsignals kann charakteristisch für die Stellung des Abstandssensors sein. Insbesondere kann die Flankensteilheit, die Maximalamplitude und dergleichen eine Rolle spielen. Ein anderer Detektionsmerkmaltyp kann ein "Maß für ein Signalrauschen" sein. Dieses Maß kann beispielsweise die Intensität oder der Pegel des Rauschens sein. Das Signalrauschen ist typischerweise bei nach unten gerichteten Abstandssensoren erhöht.

Gemäß einer weiteren vorteilhaften Ausgestaltung wird in Abhängigkeit von der Fehlstellungsinformation ein Sicherheitssystem des Kraftfahrzeugs vorübergehend abgeschaltet. Wird beispielsweise ein Notbremssystem des Kraftfahrzeugs durch die Signale der Abstandssensoren gesteuert, ist es von Vorteil, wenn diese Steuerung temporär abgeschaltet beziehungsweise unterbrochen wird, wenn die Abstandssensorsignale nicht zuverlässig sind beziehungsweise eine Fehlstellung der Abstandssensoren detektiert wurde.

Des Weiteren kann vorteilhaft sein, wenn sowohl das erste Detektionsmerkmal als auch das zweite Detektionsmerkmal mittels Durchschnittsberechnung gebildet werden. Diese Durchschnittsberechnung erfolgt beispielsweise anhand einer Vielzahl an Einzelmessungen im Laufe einer längeren Messperiode. Durch die Durchschnittsberechnung wird das jeweilige Detektionsmerkmal zuverlässiger. So kann die Zuverlässigkeit gesteigert werden, wenn beispielsweise über mehrere Messperioden die Anzahl der Echos ermittelt wird und aus diesen Anzahlen dann ein Durchschnittswert gebildet wird. Dies gilt sowohl für die Auswertung des ersten Abstandssensors als auch des zweiten Abstandssensors.

Darüber hinaus kann vorgesehen sein, dass das Bilden der Fehlstellungsinformation nach Abfahren einer vorgegebenen Wegstreckenlänge erfolgt. So kann beispielsweise die Anzahl der Echos über eine Wegstreckenlänge von 100 m für beide Abstandssensoren gemessen werden. Alternativ wird die Anzahl der Echos in einem vorgegebenen Zeitintervall, z.B. eine Minute, gemessen.

In einer weiteren vorteilhaften Ausgestaltung wird bei dem Bilden der Fehlstellungsinformation eine Information bezüglich eines Beladezustands des Kraftfahrzeugs für Kompensationszwecke berücksichtigt. Ändert sich nämlich der Beladezustand des Kraftfahrzeugs, so ändert sich typischerweise auch die Position beziehungsweise Ausrichtung des jeweiligen Abstandssensors zur Fahrbahnoberfläche. Wird beispielsweise der Kofferraum eines Kraftfahrzeugs beladen, so sinken unter Umständen die Abstandssensoren im Heck mehr ab als diejenigen an der Front des Kraftfahrzeugs. Das Verhältnis der Detektionsmerkmale eines Sensors im Heck und eines Sensors an der Front könnte sich also bereits durch den Beladezustand ändern. Um dies auszuschließen beziehungsweise zu kompensieren, können Informationen aus z.B. dem CAN-Bus des Fahrzeugs über den Beladezustand des Fahrzeugs genutzt werden.

Die oben genannte Aufgabe wird erfindungsgemäß auch gelöst durch eine Vorrichtung zur Erkennung einer Fehlstellung eines ersten Abstandssensors mit dem ersten Abstandssensor und einer Auswerteeinrichtung zum Gewinnen eines ersten Detektionsmerkmals aus einem ersten Sensorsignal des ersten Abstandssensors, sowie mit einem zweiten Abstandssensor, wobei die Auswerteeinrichtung ausgebildet ist zum Gewinnen eines zweiten Detektionsmerkmals aus einem zweiten Sensorsignal eines zweiten Abstandssensors, wobei die beiden Detektionsmerkmale vom gleichen Typ sind, und die Auswerteeinrichtung ferner ausgebildet ist zum Bilden einer Fehlstellungsinformation über die Fehlstellung des ersten Abstandssensors aus einem Verhältnis des ersten Detektionsmerkmals zu dem zweiten Detektionsmerkmal.

Die oben im Zusammenhang mit dem erfindungsgemäßen Verfahren erwähnten Vorteile und Variationsmöglichkeiten gelten sinngemäß auch für die erfindungsgemäße Vorrichtung. Dabei sind die jeweiligen Verfahrensmerkmale als funktionelle Merkmale der in Bezug auf die Vorrichtung genannten Merkmale zu sehen.

Wie oben bereits angedeutet wurde, handelt kann es sich bei den beiden Abstandssensoren um Ultraschallsensoren.

Diese werden wegen ihrer Robustheit und Zuverlässigkeit typischerweise als Abstandssensoren eingesetzt.

Die Vorrichtung zur Erkennung einer Fehlstellung eines Abstandssensors kann, wie bereits angedeutet wurde, in einem Kraftfahrzeug verbaut sein. Dabei kann einer der beiden Abstandssensoren an dem Kraftfahrzeug vorne und der andere Abstandssensor an dem Kraftfahrzeug hinten angeordnet sein. Alternativ kann auch einer der beiden Abstandssensoren an dem Kraftfahrzeug bezogen auf die Fahrtrichtung links und der andere Abstandssensor an dem Kraftfahrzeug rechts angeordnet sein. Sind mehrere Sensoren sowohl an der Front des Kraftfahrzeugs als auch am Heck des Kraftfahrzeugs angeordnet, so können für das Paar der Abstandssensoren korrespondierende Sensoren aus Heck und Front verwendet werden, z.B. erster Abstandssensor vorne außen und zweiter Abstandssensor hinten außen oder erster Abstandssensor vorne innen und zweiter Abstandssensor hinten innen. Des Weiteren können aber auch Paare von Abstandssensoren beispielsweise nur aus der Gruppe der Abstandssensoren an der, der Gruppe der Sensoren an der Front des Fahrzeugs oder aus der Gruppe der Sensoren am Heck des Fahrzeugs gebildet werden.

Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind.

Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder von diesen abweichen. Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder abweichen.

Die vorliegende Erfindung wird nun anhand der beigefügten Zeichnungen näher erläutert, in denen zeigen:
- Fig. 1: ein Kraftfahrzeug, welches eine Abstandssensorvorrichtung gemäß einer Ausführungsform der Erfindung aufweist; und
- Fig. 2: einen schematischen Ablauf eines erfindungsgemäßen Verfahrens.

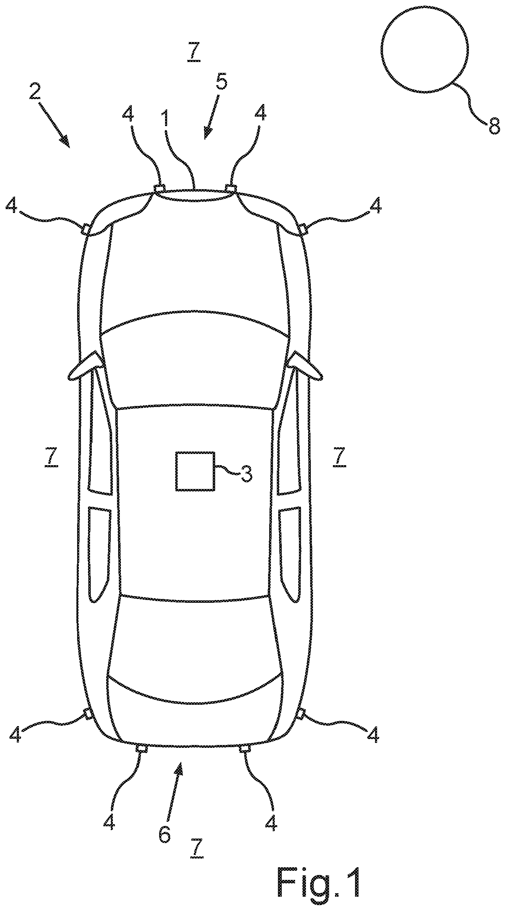

Fig. 1 zeigt ein Kraftfahrzeug 1 in der Draufsicht. Das Kraftfahrzeug 1 ist vorliegend als Personenkraftwagen ausgebildet. Das Kraftfahrzeug 1 weist hier beispielhaft eine Ultraschallsensorvorrichtung 2 als Abstandssensorvorrichtung auf, welche für ein Parkhilfesystem des Kraftfahrzeugs 1 dient. Die Ultraschallsensorvorrichtung kann ab Werk an dem Kraftfahrzeug 1 angeordnet sein. Es kann auch vorgesehen sein, dass die Ultraschallsensorvorrichtung als sogenanntes Nachrüstkit ausgebildet ist und erst nach der Fertigung des Kraftfahrzeugs an dem Kraftfahrzeug 1 angeordnet wurde.

Die Ultraschallsensorvorrichtung 2 beziehungsweise die Abstandssensorvorrichtung umfasst mindestens zwei Abstandssensoren beziehungsweise Ultraschallsensoren 4. In dem vorliegenden Ausführungsbeispiel umfasst die Ultraschallsensorvorrichtung 2 acht Ultraschallsensoren 4. Dabei sind vier Ultraschallsensoren 4 in einem Frontbereich 5 des Kraftfahrzeugs 1 angeordnet und vier Ultraschallsensoren 4 sind in einem Heckbereich 6 des Kraftfahrzeugs 1 angeordnet. Die Ultraschallsensoren können beispielsweise in entsprechenden Aussparungen beziehungsweise Durchgangsöffnungen der Stoßfänger des Kraftfahrzeugs 1 angeordnet sein. Alternativ dazu können die Ultraschallsensoren 4 verdeckt hinter den Stoßfängern angeordnet sein. Mithilfe der Ultraschallsensoren 4 kann jeweils ein Ultraschallsignal ausgesendet werden. Zudem kann das von einem Objekt 8 in einer Umgebung 7 des Kraftfahrzeugs 1 reflektierte Ultraschallsignal wieder empfangen werden.

Die Abstandssensorvorrichtung beziehungsweise die Ultraschallsensorvorrichtung 2 weist neben den mindestens zwei Ultraschallsensoren (nachfolgend auch als erster und zweiter Abstandssensor bezeichnet) ferner ein elektronisches Steuergerät 3 auf, welches zur Datenübertragung mit den Ultraschallsensoren 4 verbunden ist. Beispielsweise können die Ultraschallsensoren 4 über einen Datenbus mit dem Steuergerät 3 verbunden sein. Mithilfe des Steuergeräts 3 (nachfolgend auch Auswerteinrichtung genannt) können Sensordaten, die mit den Abstandssensoren beziehungsweise Ultraschallsensoren 4 bereitgestellt werden, ausgewertet werden. Zur Auswertung der Sensorsignale wird zumindest ein Auswerteparameter beziehungsweise Detektionsmerkmal verwendet. Dieses Detektionsmerkmal kann in Abhängigkeit von der Einbauposition und/oder dem Einbauwinkel des jeweiligen Ultraschallsensors 4 bestimmt sein. Ferner kann das Detektionsmerkmal auch in Abhängigkeit von der relativen Lage der Ultraschallsensoren 4 zueinander bestimmt sein. Das Detektionsmerkmal kann zusätzlich in Abhängigkeit von einer Frequenz und/oder einem Schalldruckpegel, mit dem das Ultraschallsignal ausgesendet wird, bestimmt sein. Insbesondere können die jeweiligen Sensorsignale der Abstandssensoren mit einem Schwellwert oder einer Schwellwertkurve verglichen werden, um das entsprechende Detektionsmerkmal zu erhalten.

Ab Werk sind die Abstandssensoren beziehungsweise Ultraschallsensoren 4 an dem Fahrzeug in etwa horizontal ausgerichtet. Dies bedeutet, dass ihre Hauptabstrahlrichtung im Wesentlichen horizontal ist. Bei einer Kollision des Fahrzeugs 1 mit einem Hindernis kann sich die Stellung eines Abstandssensors verändern. Er kann beispielsweise nach unten hängen oder nach oben weisen. Damit besitzt der Abstandssensor eine Fehlstellung beziehungsweise eine Dejustage.

Ziel der vorliegenden Erfindung ist es nun, eine derartige Justage eines oder mehrerer Abstandssensoren zu erkennen. Bei einer erkannten Dejustage können verschiedene Aktionen ausgelöst werden. So kann beispielsweise der Fahrer über die Dejustage informiert oder sicherheitskritische Systeme (wie Notbremsen) temporär abgeschaltet werden.

Die vorliegende Erfindung basiert auf dem Gedanken, eine Dejustage auf Basis eines Verhältnisses von Detektionsmerkmalen unterschiedlicher Abstandssensoren beziehungsweise Sensor-Gruppierungen zu erkennen. Ändert sich das Verhältnis, so kann auf eine Dejustage geschlossen werden. Referenz für eine Änderung kann ein Wert sein, der werksseitig in ein Kraftfahrzeug beziehungsweise Steuergerät implementiert wird.

Um das Verhältnis der Detektionsmerkmale berechnen zu können, sind für mindestens zwei Abstandssensoren das jeweilige Detektionsmerkmal zu ermitteln. Es sind also mindestens zwei Abstandssensoren auszuwerten. Gegebenenfalls können aber auch mehr als zwei Sensoren ausgewertet werden. Insbesondere lässt sich beispielsweise auch aus zwei Sensorgruppen ein entsprechendes Verhältnis bilden. Dabei können die Signale der einzelnen Abstandssensoren jeder Gruppe einzeln oder gemeinsam ausgewertet werden. Eine mögliche erste Gruppe können die vorderen Sensoren eines Kraftfahrzeugs und eine mögliche zweite Gruppe die hinteren Sensoren des Kraftfahrzeugs sein. Die Detektionsmerkmale der jeweiligen gesamten Gruppen oder die Detektionsmerkmale einzelner Sensoren aus der jeweiligen Gruppe können dann ins Verhältnis gesetzt werden.

Eine weitere erste Sensorgruppe können die Sensoren auf der rechten Seite des Fahrzeugs und eine zweite Sensorgruppe die Sensoren auf der linken Seite des Fahrzeugs sein. Sind wie in dem Beispiel von Fig. 1 sowohl vorne als auch hinten jeweils vier Abstandssensoren 4 verbaut, so kann beispielsweise auch ein Vergleich der folgenden Einzelsensoren erfolgen: Der Sensor vorne innen rechts wird mit dem Sensor hinten innen rechts verglichen, wobei die entsprechenden Detektionsmerkmale ins Verhältnis gesetzt werden. Alternativ kann auch der Sensor vorne links außen mit dem Sensor vorne rechts außen verglichen beziehungsweise die jeweiligen Detektionsmerkmale ins Verhältnis gesetzt werden. Prinzipiell können auch beliebige andere Sensoren (beispielsweise benachbarte Sensoren) oder Sensorgruppen mit jeweils mehreren Sensoren verglichen beziehungsweise deren Detektionsmerkmale ins Verhältnis gesetzt werden.

Bei der Signalauswertung eines Abstandssensors beziehungsweise einer Sensorgruppe können unterschiedliche Detektionsmerkmale ermittelt werden. So kann beispielsweise die Anzahl an Echos bei Ultraschallsensoren ermittelt werden. Dabei wird beispielsweise die Anzahl erhöht, wenn die Intensität oder der Pegel des Echos einen vorgegebenen Schwellwert übersteigt. Ein weiteres Detektionsmerkmal kann die Anzahl der detektierten und/oder klassifizierten Objekte sein. Die Sensorsignale werden hierzu einer Objekterkennung beziehungsweise Klassifizierung zugeführt. Derartige Objekte können beispielsweise Bordsteine, parkende Autos und dergleichen sein.

Ein weiteres Detektionsmerkmal kann die Anzahl an Echos sein, die nicht zur Objektbildung beitragen. Können die Echos also nicht hinsichtlich einer Objekterkennung verwertet werden, so bestimmen sie beispielsweise das Rauschverhalten des jeweiligen Sensors. Ein weiteres Detektionsmerkmal kann die Form der Hüllkurve eines Sensorsignals sein. Eine diesbezügliche Auswertung ist natürlich nur dann möglich, wenn der betroffene Sensor die Übertragung der Hüllkurve zulässt. Ein noch weiteres Detektionsmerkmal kann der Pegel beziehungsweise die Intensität des Grundrauschens sein. Weist ein Abstandssensor nämlich beispielsweise nach unten, so empfängt er wesentlich mehr Echos und das Grundrauschen erhöht sich entsprechend.

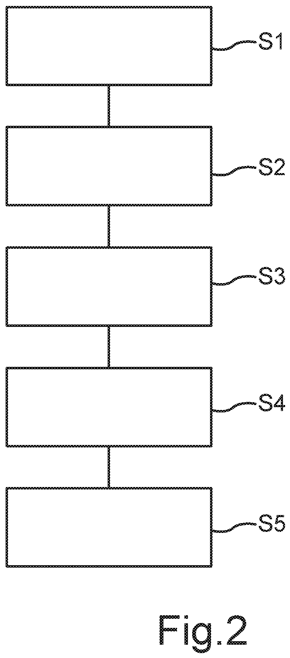

Fig. 2 zeigt schematisch ein Beispiel, wie in einem Kraftfahrzeug eine Fehlstellung eines Abstandssensors erkannt und eine entsprechende Aktion ausgelöst werden kann. In Schritt S1 wird ein erstes Detektionsmerkmal aus einem ersten Sensorsignal eines ersten Abstandssensors gewonnen. In einem anschließenden zweiten Schritt S2 erfolgt das Gewinnen eines zweiten Detektionsmerkmals aus einem zweiten Sensorsignal eines zweiten Abstandssensors. Die beiden Detektionsmerkmale sind vom gleichen Typ. Beispielsweise handelt es sich jeweils um eine Anzahl an Echos oder um eine Anzahl an detektierten Objekten. Im Folgenden Schritt S3 wird das Verhältnis des ersten Detektionsmerkmals zu dem zweiten Detektionsmerkmal beziehungsweise umgekehrt gebildet. Dazu ist es notwendig, dass die beiden Detektionsmerkmale vom gleichen Typ sind und damit vergleichbar sind.

In einem folgenden vierten Schritt S4 wird eine Fehlstellungsinformation aus dem Verhältnis von Schritt S3 gebildet. Gegebenenfalls wird das Verhältnis mit einem Schwellwert verglichen und es wird eine entsprechende binäre Fehlstellungsinformation ausgegeben. Unter Umständen lässt sich das Verhältnis auch feiner auswerten, sodass die Fehlstellungsinformation nicht nur binär, sondern mehrstufig und gegebenenfalls sogar kontinuierlich ist.

Basierend auf der Fehlstellungsinformation kann in dem Kraftfahrzeug eine Aktion ausgelöst werden. Unter Umständen wird ein System deaktiviert, das bei korrekter Stellung der Abstandssensoren von diesen gesteuert wird. Dies kann ein Bremsassistenzsystem, ein Einparkassistenzsystem oder dergleichen sein.

In einem konkreten Beispiel wird während der Fahrt gemessen, wie viele Detektionen (beispielsweise Echos, detektierte Objekte oder ähnliches) es am vorderen und hinteren Stoßfänger gibt. Diese Detektionen werden in ein Verhältnis gesetzt. Ändert sich das Verhältnis, so liegt eine mögliche Dejustage vor. So könnte insbesondere ein Sensor beziehungsweise mehrere Sensoren vorne normalerweise durchschnittlich zehn Echos pro Minute detektieren, während ein Sensor beziehungsweise mehrere Sensoren hinten normalerweise durchschnittlich nur fünf Echos pro Minute detektieren. Dies entspricht einem Verhältnis von 2:1. Beobachtet man nun dieses Verhältnis über eine längere Fahrstrecke, sollte es sich im Normalzustand nicht wesentlich ändern und insbesondere in einem vordefinierten Wertebereich bleiben. Tritt jedoch bei dem Sensor vorne oder bei dem Sensor hinten eine Dejustage beziehungsweise Fehlstellung etwa aufgrund eines Unfalls auf, so wird sich das Verhältnis über eine längere Fahrstrecke ändern. Dies kann detektiert werden.

Durch die Verwendung des Verhältnisses der Detektionsmerkmale entstehen verschiedene Vorteile. So können etwa unterschiedliche Verbaupositionen kompensiert werden. Beispielsweise sind die hinteren Sensoren häufig tiefer angebracht und detektieren daher mehr als die vorderen Sensoren. Daraus ergibt sich in der Regel ein bauartbedingtes Referenzverhältnis. Ändert sich dieses Verhältnis, so kann wiederum von einer Fehlstellung einer der Sensoren ausgegangen werden.

Ein weiterer Vorteil der Nutzung eines Verhältnisses besteht darin, dass verschiedene Untergründe kompensiert werden können. So detektieren beispielsweise alle Sensoren bei Schotter als Untergrund mehr als auf einer Teerstraße. Die Verhältnisbildung hat darüber hinaus den Vorteil, dass verschiedene Umwelteinflüsse beziehungsweise Wetterbedingungen kompensiert werden können. Bei Regen etwa detektieren alle Sensoren mehr Echos. Bei hoher Luftschalldämpfung hingegen detektieren alle Sensoren weniger Echos.

Die Funktion der Fehlstellungserkennung kann weiter dadurch verbessert werden, dass der Beladezustand des Fahrzeugs berücksichtigt wird. Dies kann beispielsweise durch bereits im Fahrzeug vorhandene Sensorik erfolgen, die eine entsprechende Ladezustandsinformation über den CAN-Bus bereitstellt. Hier kann beispielsweise eine einseitige Beladung, welche das Verhältnis der Detektionsmerkmale beeinflusst, erkannt und ausgeglichen beziehungsweise kompensiert werden. Mögliche Sensoren für die Erkennung des Beladezustands können die Lagesensoren oder Sensoren in der Luftfederung des Fahrzeugs sein. Eine weitere Verbesserung des Verfahrens zur Erkennung einer Fehlstellung kann dadurch erfolgen, dass die Dejustage nicht sofort, sondern erst nach einer (größeren) vorbestimmten Wegstrecke gemeldet wird. So können Nebeneffekte durch schlechte Untergrundverhältnisse ausgeglichen werden.

## Patentansprüche

1. Verfahren zur Erkennung einer Fehlstellung eines ersten Abstandssensors (4), der ein Ultraschallsensor ist, eines Kraftfahrzeugs (1) durch
- Gewinnen (S1) eines ersten Detektionsmerkmals aus einem ersten Sensorsignal des ersten Abstandssensors (4),
- Gewinnen (S2) eines zweiten Detektionsmerkmals aus einem zweiten Sensorsignal eines zweiten Abstandssensors (4), der ein Ultraschallsensor ist, wobei die beiden Detektionsmerkmale vom gleichen Typ sind, und
- Bilden (S4) einer Fehlstellungsinformation über die Fehlstellung des ersten Abstandssensors (4) aus einem Verhältnis (S3) des ersten Detektionsmerkmals zu dem zweiten Detektionsmerkmal,
**dadurch gekennzeichnet, dass**
die beiden Detektionsmerkmale jeweils eine Anzahl an Echos, eine Anzahl an detektierten Objekten einer vorgegebenen Klasse, eine Form einer Hüllkurve des jeweiligen Sensorsignals oder ein Maß für ein Signalrauschen sind.

2. Verfahren nach Anspruch 1,
**dadurch gekennzeichnet, dass**
in Abhängigkeit von der Fehlstellungsinformation ein Sicherheitssystem des Kraftfahrzeugs vorübergehend abgeschaltet wird (S5).

3. Verfahren nach einem der vorhergehenden Ansprüche,
**dadurch gekennzeichnet, dass**
sowohl das erste Detektionsmerkmal als auch das zweite Detektionsmerkmal mittels Durchschnittsberechnung gebildet werden.

4. Verfahren nach einem der vorhergehenden Ansprüche,
**dadurch gekennzeichnet, dass**
das Bilden (S4) der Fehlstellungsinformation nach Abfahren einer vorgegebenen Wegstreckenlänge erfolgt.

5. Verfahren nach einem der vorhergehenden Ansprüche,
**dadurch gekennzeichnet, dass**
bei dem Bilden (S4) der Fehlstellungsinformation eine Information bezüglich eines Beladezustands des Kraftfahrzeugs für Kompensationszwecke berücksichtigt wird.

6. Vorrichtung zur Erkennung einer Fehlstellung eines ersten Abstandssensors (4) mit
- dem ersten Abstandssensor (4) und
- einer Auswerteeinrichtung (3) zum Gewinnen (S1) eines ersten Detektionsmerkmals aus einem ersten Sensorsignal des ersten Abstandssensors (4), und
- einem zweiten Abstandssensor, wobei
- die Auswerteeinrichtung (3) ausgebildet ist zum Gewinnen (S2) eines zweiten Detektionsmerkmals aus einem zweiten Sensorsignal des zweiten Abstandssensors (4), wobei die beiden Detektionsmerkmale vom gleichen Typ sind, und
- die Auswerteeinrichtung (3) ferner ausgebildet ist zum Bilden (S4) einer Fehlstellungsinformation über die Fehlstellung des ersten Abstandssensors (4) aus einem Verhältnis (S3) des ersten Detektionsmerkmals zu dem zweiten Detektionsmerkmal,
- wobei beide Abstandssensoren (4) Ultraschallsensoren sind,
**dadurch gekennzeichnet, dass**
die beiden Detektionsmerkmale jeweils eine Anzahl an Echos, eine Anzahl an detektierten Objekten einer vorgegebenen Klasse, eine Form einer Hüllkurve des jeweiligen Sensorsignals oder ein Maß für ein Signalrauschen sind.

7. Kraftfahrzeug mit einer Vorrichtung nach Anspruch 6,
**dadurch gekennzeichnet, dass**
einer der beiden Abstandssensoren (4) an dem Kraftfahrzeug (1) vorne und der andere Abstandssensor (4) an dem Kraftfahrzeug (1) hinten angeordnet ist.

8. Kraftfahrzeug (1) mit einer Vorrichtung nach Anspruch 6,
**dadurch gekennzeichnet, dass**
einer der beiden Abstandssensoren (4) an dem Kraftfahrzeug (1) bezogen auf die Fahrtrichtung links und der andere Abstandssensor (4) an dem Kraftfahrzeug (1) rechts angeordnet ist.

## Claims

1. Method for detecting a misalignment of a first distance sensor (4), which is an ultrasonic sensor, of a motor vehicle (1) by
□ extracting (S1) a first detection feature from a first sensor signal of the first distance sensor (4),
□ extracting (S2) a second detection feature from a second sensor signal of a second distance sensor (4), which is an ultrasonic sensor, wherein the two detection features are of the same type, and
□ constructing (S4) misalignment information about the misalignment of the first distance sensor (4) from a ratio (S3) of the first detection feature to the second detection feature,
**characterized in that**
the two detection features are each a number of echoes, a number of detected objects of a specified class, a shape of an envelope curve of the respective sensor signal, or a measure of signal noise.

2. Method according to Claim 1,
**characterized in that**
depending on the misalignment information a safety system of the motor vehicle is temporarily switched off (S5).

3. Method according to one of the preceding claims,
**characterized in that**
both the first detection feature and the second detection feature are formed using an average calculation.

4. Method according to one of the preceding claims,
**characterized in that**
the construction (S4) of the misalignment information takes place after a specified distance has been travelled.

5. Method according to one of the preceding claims,
**characterized in that**
in the process of constructing (S4) the misalignment information, information relating to a loading condition of the motor vehicle is taken into account for compensation purposes.

6. Device for detecting a misalignment of a first distance sensor (4) with
□ the first distance sensor (4) and
□ an evaluation device (3) for extracting (S1) a first detection feature from a first sensor signal of the first distance sensor (4), and
□ a second distance sensor, wherein
□ the evaluation device (3) is designed to extract (S2) a second detection feature from a second sensor signal of the second distance sensor (4), wherein the two detection features are of the same type, and
□ the evaluation device (3) is also designed to construct (S4) misalignment information about the misalignment of the first distance sensor (4) from a ratio (S3) of the first detection feature to the second detection feature,
- wherein both distance sensors (4) are ultrasonic sensors,
**characterized in that**
the two detection features are each a number of echoes, a number of detected objects of a specified class, a shape of an envelope curve of the respective sensor signal, or a measure of signal noise.

7. Motor vehicle having a device according to Claim 6,
**characterized in that**
one of the two distance sensors (4) is arranged at the front of the motor vehicle (1) and the other distance sensor (4) is arranged at the rear of the motor vehicle (1) .

8. Motor vehicle (1) having a device according to Claim 6,
**characterized in that**
one of the two distance sensors (4) is arranged on the left-hand side of the motor vehicle (1) and the other distance sensor (4) on the right-hand side of the motor vehicle (1), relative to the direction of travel.

## Revendications

1. Procédé permettant d'identifier un désalignement d'un premier capteur de distance (4), qui est un capteur à ultrasons, d'un véhicule automobile (1) par les étapes consistant à
- obtenir (S1) une première particularité de détection à partir d'un premier signal de capteur du premier capteur de distance (4),
- obtenir (S2) une deuxième particularité de détection à partir d'un deuxième signal d'un deuxième capteur de distance (4), qui est un capteur à ultrasons, les particularités de détection étant du même type, et
- constituer (S4) une information de désalignement concernant le désalignement du premier capteur de distance (4) à partir d'un rapport (S3) entre la première particularité de détection et la deuxième particularité de détection,
**caractérisé en ce que**
les deux particularités de détection sont respectivement un nombre d'échos, un nombre d'objets détectés d'une classe prédéfinie, une forme d'une enveloppante du signal de capteur respectif ou une mesure d'un bruit de signal.

2. Procédé selon la revendication 1,
**caractérisé en ce que**
système de sécurité du véhicule automobile est provisoirement mis hors tension (S5) en fonction de l'information de désalignement.

3. Procédé selon l'une quelconque des revendications précédentes,
**caractérisé en ce que**
la fois la première particularité de détection et la deuxième particularité de détection sont constituées au moyen d'un calcul de moyenne.

4. Procédé selon l'une quelconque des revendications précédentes,
**caractérisé en ce que**
la constitution (S4) de l'information de désalignement est effectuée après qu'un tronçon d'itinéraire prédéfini a été parcouru.

5. Procédé selon l'une quelconque des revendications précédentes,
**caractérisé en ce que**
lors de la constitution (S4) de l'information de désalignement, une information concernant un état de chargement du véhicule automobile est prise en compte à des fins de compensation.

6. Dispositif permettant d'identifier un désalignement d'un premier capteur de distance (4), comprenant
- un premier capteur de distance (4), et
- un dispositif d'évaluation (3) pour obtenir (S1) une première particularité de détection à partir d'un premier signal de capteur du premier capteur de distance (4), et
- un deuxième capteur de distance, dans lequel
- le dispositif d'évaluation (3) est réalisé pour obtenir (S2) une deuxième particularité de détection à partir d'un deuxième signal du deuxième capteur de distance (4), les deux particularités de détection étant du même type, et
- le dispositif d'évaluation (3) est en outre réalisé pour constituer (S4) une information de désalignement concernant le désalignement du premier capteur de distance (4) à partir d'un rapport (S3) entre la première particularité de détection et la deuxième particularité de détection,
- les deux capteurs de distance (4) étant des capteurs à ultrasons,
**caractérisé en ce que**
les deux particularités de détection sont respectivement un nombre d'échos, un nombre d'objets détectés d'une classe prédéfinie, une forme d'une enveloppante du signal de capteur respectif ou une mesure d'un bruit de signal.

7. Véhicule automobile, comprenant un dispositif selon la revendication 6,
**caractérisé en ce que**
l'un des deux capteurs de distance (4) est disposé à l'avant du véhicule automobile (1), et l'autre capteur de distance (4) est disposé à l'arrière du véhicule automobile (1).

8. Véhicule automobile (1), comprenant un dispositif selon la revendication 6,
**caractérisé en ce que**
l'un des deux capteurs de distance (4) est disposé à gauche sur le véhicule automobile (1) par rapport au sens de la marche, et l'autre capteur de distance (4) est disposé à droite sur le véhicule automobile (1).
